# EUROPÄISCHE PATENTSCHRIFT

(11) **EP 0 924 041 B1**
(45) Veröffentlichungstag und Bekanntmachung des Hinweises auf die Patenterteilung: **11.07.2001**
(21) Anmeldenummer: 98121607.0
(22) Anmeldetag: 12.11.1998
(51) Int. Cl.: B29B 9/06, B65G 53/30

(54) **Verfahren zum Herstellen von Granulaten aus polymeren Werkstoffen**
Process for producing granules of polymeric material
Procédé pour la fabrication de granules à base de matériaux polymères

(30) Priorität: 15.12.1997 DE 19755732
(43) Veröffentlichungstag der Anmeldung: 23.06.1999
(73) Patentinhaber: Coperion Waeschle GmbH & Co. KG, 88250 Weingarten (DE)
(72) Erfinder: Stark, Bernhard Dr., 88273 Fronreute (DE)
(74) Vertreter: Prietsch, Reiner, Dipl.-Ing.

(56) Entgegenhaltungen:
- CH-A- 439 690
- DD-A- 292 202
- GB-A- 1 400 426
- US-A- 4 385 016
- US-A- 5 143 673
- US-A- 5 621 015
- PATENT ABSTRACTS OF JAPAN vol. 007, no. 120 (M-217), 25. Mai 1983 & JP 58 038117 A (IDEMITSU SEKIYU KAGAKU KK), 5. März 1983

## Beschreibung

Die Erfindung betrifft ein Verfahren zum Herstellen von Granulaten aus polymeren Werkstoffen, mit den im Oberbegriff des Anspruches 1 angegebenen Schritten.

Ein derartiges Verfahren ist aus der Veröffentlichung G. Götz, "Spin-Away-Dryer Zentrifugaltrockner zum Entwässern von Kunststoffgranulaten", GAK 12/1972, S. 1180 bekannt, in der eine typische Granulieranlage beschrieben wird, bei der sich - schon aus Gründen er Platzersparnis - der Trockner in unmittelbarer Nachbarschaft der Granuliervorrichtung befindet. Zur Entlastung des Trockners wird unmittelbar vor diesem ein Wasservorabscheider angeordnet, der so viel Wasser abscheidet, daß die verbleibende Wassermenge gerade noch eine sichere Förderung des Granulatstromes vom Vorabscheider in den Trockner gewährleistet. Zwischen dem Vorabscheider und dem Trockner befindet sich dementsprechend ein nur kurzes, überdies fallend angeordnetes Rohrstück. Dieses Rohrstück hat den gleichen Durchmesser wie die (erste) Leitung von der Granuliervorrichtung zu dem Vorabscheider. Mit diesem Verfahren ist es schwierig, die am Ausgang der Granuliervorrichtung anfallende Dispersion aus Granulat und Kühlflüssigkeit zu einem entfernten Trockner zu transportieren.

Bei einem aus einem Prospekt der Firma GALA Kunststoff- und Kautschukmaschinen GmbH bekannten Verfahren wird in der Regel pulver- oder grießförmig vorliegende Polymerwerk-stoff wird mittels eines Extruders erwärmt, plastifiziert und durch eine Lochplatte hindurch in einen Wasserstrom gedrückt, in dem ein Messer rotiert, das die so erzeugten und in der Erstarrung befindlichen Einzelstränge des Polymerwerkstoffs in Granulate zerschneidet. Die Dispersion aus sich abkühlenden Granulaten und Wasser wird über eine relativ kurze Strecke hydraulisch über eine Förderleitung zu einem Trockner gefördert, in dem das Wasser von dem Granulat abgetrennt, gefiltert, temperiert und dann mittels einer Pumpe unter Druck wieder in den Behälter zurückgeführt wird. Das nun trockene Granulat kann anschließend über eine pneumatische Förderung zu einem relativ weit entfernten Zielort, beispielsweise zu einem Vorratssilo, transportiert werden.

Das beschriebene Verfahren muß aus technologischen Gründen, unter anderem zur Vermeidung sog. Doppelkorns (infolge unzureichender Abkühlung miteinander verklebte Granulate), mit einer im Verhältnis zur Granulatmenge hohen Wassermenge betrieben werden. Dementsprechend beträgt der Granulatgehalt der Dispersion in der Förderleitung zum Trockner nur etwa 5 bis 10 Vol.%. Bei einem so niedrigen Granulatgehalt läßt sich eine hydraulische Förderleitung nicht wirtschaftlich betreiben. Deshalb steht der Trockner in der Nähe des Extruders und das getrocknete Granulat wird im Bedarfsfall pneumatisch weitertransportiert. Die pneumatische Förderung erfordert allerdings ihrerseits einen nicht unbeträchtlichen Aufwand.

In anderem Zusammenhang, nämlich aus der Dissertation "Hydraulische Förderung von Eis zum Kühlen von Bergwerken", TU Hannover 1991, ist eine Versuchsanlage zur hydraulischen Förderung eines Gemisches aus Eis und Wasser bekannt. Sie umfaßt im wesentlichen eine ringförmig geschlossene Rohrleitung, die von einer Vakuum-Eismaschine mit einer Dispersion aus Eis und Wasser beschickt wird, deren Gehalt an Eis relativ gering ist. Zur Erhöhung des Eisgehaltes wird die Dispersion mittels einer Kreiselpumpe mit geringer Strömungsgeschwindigkeit im Kreis gepumpt und der Rohrleitung währenddessen über ein integriertes Siebrohr ein Volumenstrom an Wasser entnommen, der gleich dem Volumenstrom der von der Vakuum-Eismaschine gelieferten Eis-/Wasserdispersion ist. Der entnommene Volumenstrom wird zur Vakuum-Eismaschine zurückgeführt. Ist der gewünschte Eisgehalt erreicht, wird die Pumpleistung erhöht, bis die für die Versuchsdurchführung gewünschte Strömungsgeschwindigkeit erreicht ist. Dem Eisgehalt der Dispersion sind jedoch relativ niedrige Grenzen gesetzt, weil die Leistung der Kreiselpumpe mit zunehmendem Eis-, d.h. Feststoffgehalt, immer weiter abnimmt.

Der Erfindung liegt die Aufgabe zugrunde, bei einem Verfahren der einleitend angegebenen Gattung die am Ausgang der Granuliervorrichtung anfallende Dispersion aus Granulat und Kühlflüssigkeit auf wirtschaftliche Weise zu einem entfernten, ggfs. weit entfernten Trockner zu transportieren.

Diese Aufgabe ist erfindungsgemäß dadurch gelöst, daß die aufkonzentrierte Dispersion aus Granulat und Kühlflüssigkeit in einer im Verhältnis zu der Länge der ersten Leitung vielfach längeren Förderleitung zum Trockner transportiert wird.

Die Erfindung beruht auf dem Umstand, daß die hydraulische Förderung eines Feststoffs um so wirtschaftlicher ist, je höher der Feststoffgehalt der Dispersion ist, und daß bei dem bekannten Granulierverfahren der Granulatgehalt für den hydraulischen Transport der Dispersion weit über den für den eigentlichen Granulierschritt einzuhaltenden Wert gesteigert werden kann, bevor die hydraulische Förderleitung verstopft. Der vorliegende Vorschlag ermöglicht deshalb, den Trockner weit entfernt vom Extruder, z.B. in der Nähe eines Vorratssilos, anzuordnen und auf diese Weise erhebliche Kosten für eine pneumatische Förderung des Granulats vom Trockner zum Vorratssilo einzusparen.

Weitere Kosten können eingespart werden, wenn der Nenndurchmesser der Förderleitung geringer ist als derjenige der ersten Leitung (Anspruch 2). Das Durchmesserverhältnis kann insbesondere kleiner als 0,5 sein.

Vorzugsweise wird auch der abgetrennte Teil der Kühlflüssigkeit zur erneuten Verwendung zum Kühlen beim Einpressen und Zerschneiden der Einzelstränge zurückgeführt (Anspruch 3).

Der abgeschiedene Teil der Kühlflüssigkeit wird zweckmäßig (ebenfalls) erneut zum Kühlen verwendet (Anspruch 4).

Je nach den örtlichen Gegebenheiten kann für den Transport der Dispersion der von der Pumpe zum Rückführen der abgetrennten Kühlflüssigkeit erzeugte Förderdruck genügen. Es kann aber auch notwendig sein, die Dispersion selbst zu pumpen. Dies kann vor dem Abscheiden (Anspruch 5) oder nach dem Abscheiden (Anspruch 6) eines Teils der Kühlflüssigkeit geschehen. Im ersten Fall arbeitet die Pumpe dann wegen des vor dem Abscheiden eines Teils der Kühlflüssigkeit niedrigen Gehalts an Granulat mit einem etwas besseren Wirkungsgrad und ist einem geringeren Verschleiß ausgesetzt. Dieses Verfahren empfiehlt sich insbesondere beim Einsatz von Pumpen, deren Volumenstrom und Förderhöhe maßgeblich vom Feststoffgehalt des Mediums abhängen. Dies trifft vor allem auf Kreiselpumpen zu. Im letzteren Fall, bei Anordnung nach dem Abscheiden eines Teils der Kühlflüssigkeit, muß die Pumpe nur für einen entsprechend verringerten Volumenstrom der nun höher konzentrierten Dispersion ausgelegt sein. Allerdings kann dann die maximale Förderkapazität der Förderleitung nicht ausgenutzt werden da letztere mit einem deutlich höheren Feststoffgehalt der Dispersion als die Pumpe betrieben werden kann. Optimal ist daher die Kombination beider Maßnahmen. Im ersten Schritt wird dann bis auf einen für die Pumpe gut verträglichen Gehalt und im zweiten Schritt bis auf den höheren Gehalt, bei dem die Kapazität der Förderleitung am besten ausgenutzt wird, aufkonzentriert.

Falls es wünschenswert ist, die Dispersion zu konditionieren, z.B. zu erwärmen oder zu kühlen, kann diese Konditionierung vor dem Transportieren der Dispersion (Anspruch 7) oder/und nach dem Transportieren der Dispersion (Anspruch 8) vorgenommen werden.

Bevorzugt wird die hydraulische Förderung, insbesondere die Förderung über eine längere Strecke, durch eine Regelung unterstützt und optimiert. Hierzu kann insbesondere der abgeschiedene Teil der Kühlflüssigkeit als Stellgröße benutzt werden, und zwar in Abhängigkeit von einer Regelgröße, bei der es sich um den Granulatgehalt (Anspruch 9), den Volumenstrom (Anspruch 10) oder den Druck (Anspruch 11) der Dispersion handeln kann.

Vorteilhaft ist der Transportweg der Dispersion zwischen der Stelle, an der ein Teil der Kühlflüssigkeit abgeschieden wird, und dem Trockner mindestens um eine Größenordnung länger als der Transportweg der Dispersion zwischen der Stelle, an der die Einzelstränge zerschnitten werden, und der Stelle, an der ein Teil der Kühlflüssigkeit abgeschieden wird (Anspruch 12).

Das Verfahren nach dem vorliegenden Vorschlag wird anhand der schematisch aufzufassenden Zeichnung näher erläutert. Es zeigt:
- Figur 1: ein erstes Ausführungsbeispiel einer Granulieranlage mit integrierter hydraulischer Förderung des Granulats zu einem abgesetzten Trockner,
- Figur 2: ein zweites Ausführungsbeispiel dieser Anlage und
- Figur 3: ein drittes Ausführungsbeispiel.

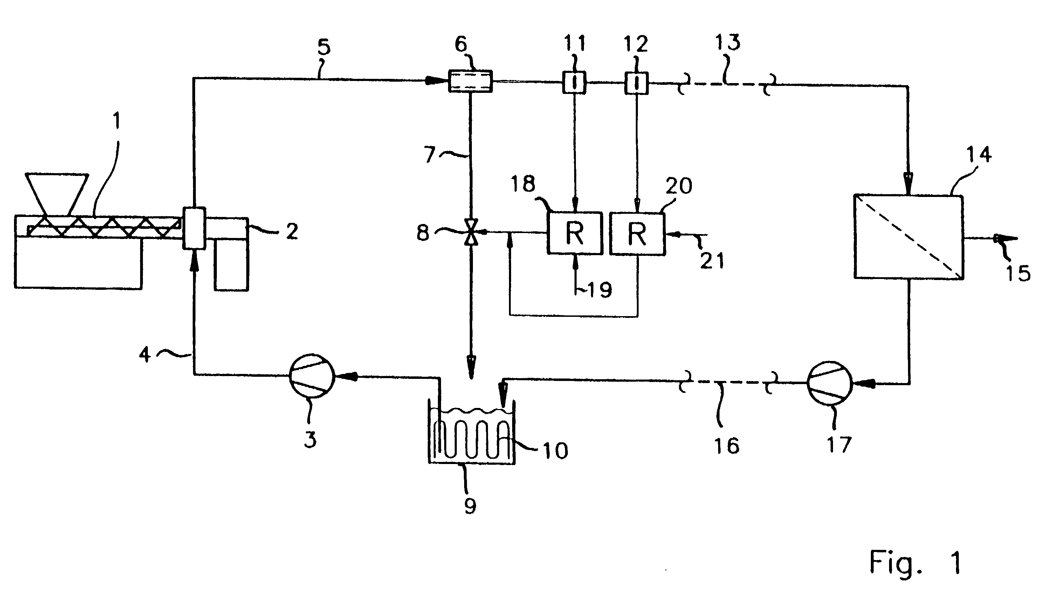

Die in Figur 1 dargestellte Anlage umfaßt einen Extruder 1, der einen polymeren, pulver- oder grießförmigen Werkstoff plastifiziert und in ein Granulierwerkzeug 2 drückt. In diesem Granulierwerkzeug, dessen Aufbau dem Fachmann bekannt ist, wird die z.B. mittels einer nicht dargestellten Lochplatte in Einzelstränge aufgeteilte, plastifizierte Masse mittels eines ebenfalls nicht dargestellten Messers in einem Wasserbad zu Granulat zerschnitten. Hierzu fördert eine Pumpe 3 über eine Leitung 4 Kühlwasser in das Granulierwerkzeug 2.

Die in dem Granulierwerkzeug 2 anfallende Dispersion aus Granulat und Wasser wird über eine Leitung 5 zu einem Siebrohr 6 gefördert. Das Siebrohr 6 dient zur Abscheidung und Entnahme eines Teils des Wassers, um die Dispersion dadurch aufzukonzentrieren. Es kann durch eine vergleichbar arbeitende Vorrichtung ersetzt werden, die aus der Dispersion einen Teil des Wassers abscheidet. Der abgeschiedene Teilstrom granulatfreien Wassers wird über eine Leitung 7, in deren Zug sich ein steuerbares Ventil 8 befindet, an beliebiger Stelle in den Kühlwasserkreis eingespeist, im Ausführungsbeispiel in ein in diesem Kreis liegendes Becken 9, das auch mit Mitteln 10 zur Temperierung des Kühlwassers versehen ist. Aus diesem Becken entnimmt die Pumpe 3 das Kühlwasser, das über die Leitung 4 in das Granulierwerkzeug 2 eintritt.

Die Stellung des steuerbaren Ventils 8 bestimmt den Volumenstrom, also den Durchfluß des abgeschiedenen Teilstroms granulatfreien Wassers durch die Leitung 7. Schon die durch eine geeignete, feste Einstellung des Ventils 8 bewirkte Aufkonzentration steigert die Förderkapazität einer Förderleitung, bezogen auf das je Zeiteinheit geförderte Granulatvolumen, beträchtlich. Das bedeutet, daß bei einem durch die Leistung des Granulierwerkzeuges 2 vorgegebenen Volumen an je Zeiteinheit produziertem Granulat eine Förderleitung mit geringerem Nenndurchmesser genügt, als ohne eine solche Aufkonzentration von z.B. 5 bis 10 Vol.-% auf z.B. 30 bis 40 Vol.-%.

Noch besser kann die Förderkapazität der Förderleitung 13 mit der nachfolgend beschriebenen Regelung genutzt werden. Hierzu folgt auf das Siebrohr 6 in Strömungsrichtung eine Meßvorrichtung 11, ggfs. eine weitere Meßvorrichtung 12, die beide noch erläutert werden werden. Anschließend findet der eigentliche hydraulische Transportvorgang statt. Hierzu tritt die Dispersion in eine lange Förderleitung 13 ein, die zu einem nahe dem Zielort befindlichen Trockner 14 führt. Die Länge der Förderleitung 13 beträgt ein Vielfaches der Länge der Leitung 5. Insbesondere ist die Förderleitung 13 um mindestens eine Größenordnung länger als die Leitung 5. Die Länge der Leitung 5 beträgt beispielsweise 25 bis 50 m bei einem Innendurchmesser von z.B. rund 160 mm und einer Fördergeschwindigkeit von 2,5 m/s und 6 Vol.-% Granulat in der Dispersion, so daß dem Granulat eine ausreichend lange Verweilzeit von z.B. 10 bis 20 s zur Kühlung zur Verfügung steht. Die Länge der Förderleitung beträgt dann z.B. zwischen 250 und 1000 m bei einem Innendurchmesser von z.B. rund 70 mm und einer Fördergeschwindigkeit von 2,5 m/s und 35 Vol.-% Granulat in der Dispersion.

In dem Trockner 14, dessen Aufbau dem Fachmann ebenfalls bekannt ist, wird das Wasser von dem Granulat getrennt. Das Granulat wird über einen Auslaß 15 ausgetragen, während das nun granulatfreie Wasser über eine Rücklaufleitung 16, in der nötigenfalls eine weitere Pumpe 17 liegt, in den Behälter 9 zurückströmt.

Die Meßvorrichtung 11 mißt wahlweise den Granulatgehalt, den Volumenstrom der Dispersion oder den Druck am Anfang der Förderleitung 13 und gibt ein entsprechendes Signal an einen Regler 18 ab. Dieser Regler 18 erhält bei 19 die entsprechende Größe als Sollwert oder als Führungsgröße und verstellt das Ventil 8, um den von der Meßvorrichtung 11 ermittelten Istwert in möglichst guter Übereinstimmung mit dem Sollwert bzw. der Führungsgröße zu halten. Für welche der genannten Größen die Meßvorrichtung 11 ausgelegt ist, richtet sich nach den Bedürfnissen der Praxis. Soll beispielsweise die maximale Förderkapazität der hydraulischen Förderleitung 13 möglichst gut ausgenutzt werden, kommt in erster Linie eine Messung und Regelung des Volumenstroms oder des Drucks in Betracht. Ist hingegen die Verarbeitungskapazität des Trockners 14 begrenzt, kann es zweckmäßiger sein, den Granulatgehalt zu messen und regeln. Die Führungsgröße des Reglers 18 kann dann von einer den Betriebszustand des Trockners 14 kennzeichnenden Größe, z.B. der Temperatur am Eintritt des Trockners, abgeleitet werden. Im Bedarfsfall kann der Regler 18 ein weiteres Signal zur Beeinflussung der Förderleistung der Pumpe 3 liefern (nicht dargestellt).

Die optionale Meßvorrichtung 12 mißt eine andere Größe als die Meßvorrichtung 11 und gibt ein entsprechendes Signal an den optionalen Regler 20 ab, der die entsprechende Größe als Sollwert oder Führungsgröße bei 21 erhält, und dessen Stellsignal auf das Stellsignal des Reglers 18 aufgeschaltet ist. Alternativ kann das Stellsignal des Reglers 20 auch die Führungsgröße für den Regler 18 ersetzen oder bilden. Wenn z.B. die Meßvorrichtung 11 den Granulatgehalt mißt, weil dieser in erster Linie konstant gehalten werden soll, kann die Meßvorrichtung 12 den Druck oder den Volumenstrom am Anfang der hydraulischen Förderleitung 13 messen. Der Regler 20 erzeugt dann bei Messung eines Druckanstieges oder einer Volumenstromabnahme, die für eine bevorstehende Verstopfung der hydraulischen Förderleitung 13 signifikant sind, ein Stellsignal, das das steuerbare Ventil 8 schließt oder zumindest in Schließrichtung verstellt, bis die Verstopfungsgefahr durch die auf diese Weise erzielte Senkung des Granulatgehaltes und die damit verbesserte Förderbarkeit der Dispersion beseitigt ist.

In der Regel reicht die Förderleistung der Pumpe 3 nicht aus, um die Dispersion über eine größere Entfernung zu fördern. In diesem Fall ist zwischen dem Granulierwerkzeug 2 und dem Beginn der Förderleitung 13 eine weitere Pumpe erforderlich.

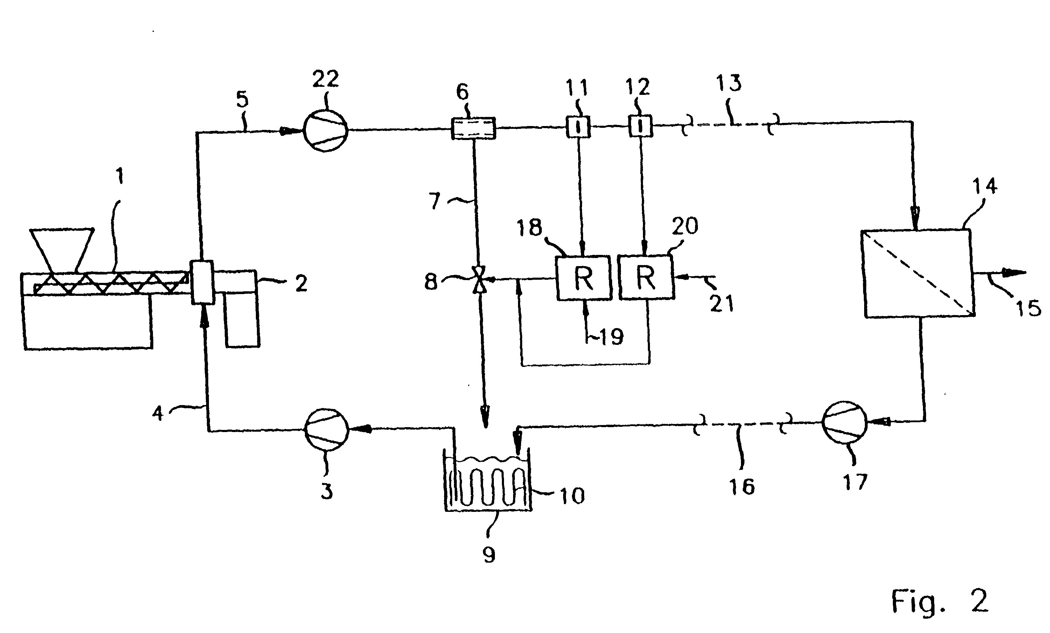

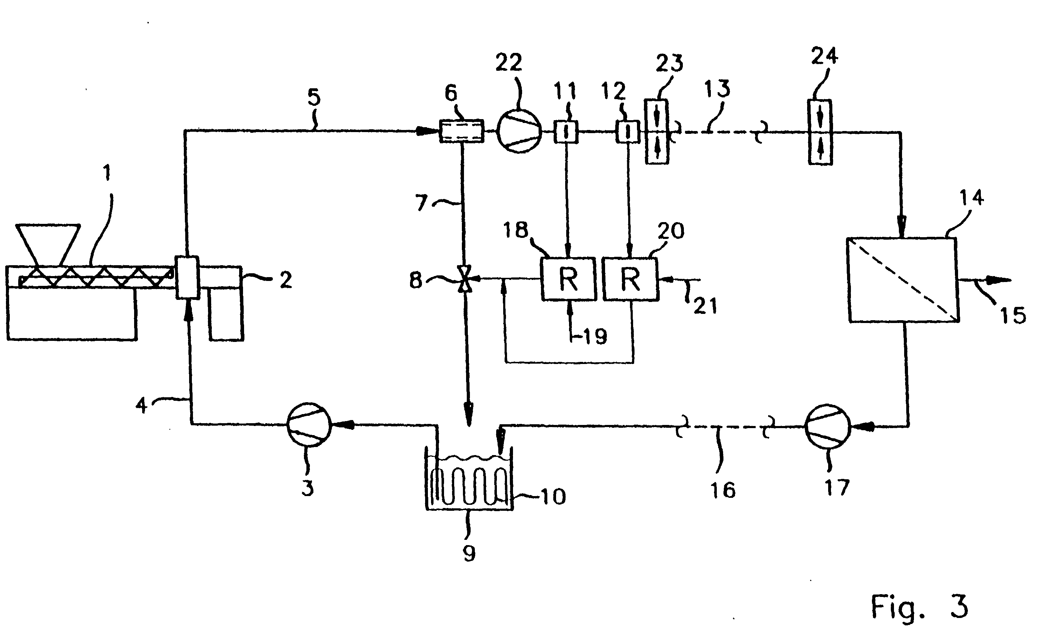

Eine solche weitere Pumpe 22 kann gemäß Figur 2 stromauf des Siebrohrs 6 oder gemäß Figur 3 stromab des Siebrohrs 6 angeordnet sein. Im ersteren Fall muß die weitere Pumpe 22 den gesamten, aus dem Granulierwerkzeug 2 austretenden, relativ schwach konzentrierten Volumenstrom der Dispersion fördern, jedoch kann über den Regelkreis 6, 11, 18, 8 bis zu einer optimalen Nutzung der Förderkapazität der Förderleitung 13 aufkonzentriert werden. Der Granulatgehalt der Dispersion kann in diesem Fall bei 40 bis 50 Vol.-% liegen. Im letzteren Fall wird hingegen der Umstand genutzt, daß die Pumpe 22 eine Dispersion mit einem deutlich höheren Granulatgehalt von z.B. 30 Vol.-% als ihn die aus dem Granulierwerkzeua 2 austretende Dispersion mit etwa 5 bis 10 Vol.-% hat, störungsfrei und ohne merkliche Wirkungsgradverschlechterung fördern kann. Die Pumpe braucht dann nur auf den um den abgeschiedenen Teilstrom granulatfreien Wassers verminderten Volumenstrom ausgelegt zu sein. Allerdings wird dann die Förderkapazität der Förderleitung 13 nicht optimal genutzt. Bei sehr langen Förderleitungen und/oder sehr großen Volumenströmen kann es deshalb wirtschaftlich sein, in diesem Fall der Pumpe 22 in der Anlage nach Fig. 3 ein weiteres Siebrohr mit nachgeschaltetem Regelkreis analog 6, 11, 18, 8 und optional 12, 20 nachzuordnen. Die Dispersion wird somit in zwei Stufen stromauf und stromab der Pumpe 22 optimal aufkonzentriert.

Im übrigen hat die Anlage in der Ausführungsform nach Fig. 3 zusätzlich eine Konditioniereinrichtung 23 am Anfang der Förderleitung 13, z.B. einen Kühler, der die Wasseraufnahme des Granulats verringert weil diese temperaturabhängig ist. Eine weitere Konditioniereinrichtung 24 befindet sich am Ende der Förderleitung 13 und dient dazu die Eigenschaften der Dispersion oder des Granulats vor dem Eintritt in den Trockner 14 gezielt zu beeinflussen. Die Konditionierung kann also aus einer Erwärmung der gesamten Dispersion, beispielsweise mittels eines Wärmetauschers, aber auch aus einer energetisch günstigeren, primär auf das Einzelkorn gerichteten Erwärmung bestehen, um den Trocknungsvorgang zu erleichtern.

## Patentansprüche

1. Verfahren zum Herstellen von Granulaten aus polymeren Werkstoffen mit den Schritten
- Plastifizieren des Polymers
- Aufteilen der plastifizierten Masse in Einzelstränge
- Einpressen der Einzelstränge in eine Kühlflüssigkeit
- Zerschneiden der Einzelstränge in der Kühlflüssigkeit zu Granulat
- Transportieren der Dispersion aus Granulat und Kühlflüssigkeit durch eine erste Leitung zu einer Abscheidevorrichtung, insbesondere zu einem Siebrohr
- Erhöhen des Granulatgehalts der Kühlflüssigkeit durch Abscheiden eines Teils derselben
- Trennen der Kühlflüssigkeit von dem Granulat in dem Trockner,
**dadurch gekennzeichnet,**
daß die aufkonzentrierte Dispersion aus Granulat und Kühlflüssigkeit in einer im Verhältnis zu der Länge der ersten Leitung/vielfach längeren Förderleitung zum Trockner transportiert wird.

2. Verfahren nach Anspruch 1, dadurch gekennzeichnet, daß der Nenndurchmesser der Förderleitung geringer ist als derjenige der ersten Leitung.

3. Verfahren nach Anspruch 1 oder 2, dadurch gekennzeichnet, daß die abgetrennte Kühlflüssigkeit zur erneuten Verwendung zum Kühlen beim Einpressen und Zerschneiden der Einzelstränge zurückgeführt wird.

4. Verfahren'nach einem der Ansprüche 1 bis 3, dadurch gekennzeichnet, daß der abgeschiedene Teil der Kühlflüssigkeit erneut zum Kühlen verwendet wird.

5. Verfahren nach einem der Ansprüche 1 bis 4, dadurch gekennzeichnet, daß die Dispersion vor dem Abscheiden eines Teils der Kühlflüssigkeit gepumpt wird.

6. Verfahren nach einem der Ansprüche 1 bis 5, dadurch gekennzeichnet, daß die Dispersion nach dem Abscheiden eines Teils der Kühlflüssigkeit gepumpt wird.

7. Verfahren nach einem der Ansprüche 1 bis 6, dadurch gekennzeichnet, daß die Dispersion vor dem Transportieren zu dem Trockner konditioniert wird.

8. Verfahren nach einem der Ansprüche 1 bis 7, dadurch gekennzeichnet, daß die Dispersion vor dem Eintreten in den Trockner konditioniert wird.

9. Verfahren nach einem der Ansprüche 1 bis 8, dadurch gekennzeichnet, daß der abgeschiedene Teil der Kühlflüssigkeit als Stellgröße in Abhängigkeit von dem Granulatgehalt der Dispersion als Regelgröße verändert wird.

10. Verfahren nach einem der Ansprüche 1 bis 9, dadurch gekennzeichnet, daß der abgeschiedene Teil der Kühlflüssigkeit als Stellgröße in Abhängigkeit von dem Volumenstrom der Dispersion als Regelgröße verändert wird.

11. Verfahren nach einem der Ansprüche 1 bis 10, dadurch gekennzeichnet, daß der abgeschiedene Teil der Kühlflüssigkeit als Stellgröße in Abhängigkeit von dem Druck der Dispersion als Regelgröße verändert wird.

12. Verfahren nach einem der Ansprüche 1 bis 11, dadurch gekennzeichnet, daß der Transportweg der Dispersion zwischen der Stelle, an der ein Teil der Kühlflüssigkeit abgeschieden wird, und dem Trockner mindestens um eine Größenordnung länger als der Transportweg der Dispersion zwischen der Stelle, an der die Einzelstränge zerschnitten werden, und der Stelle ist, an der ein Teil der Kühlflüssigkeit abgeschieden wird.

## Claims

1. A process for producing granules from polymer materials comprising the following steps:
- plasticising the polymer,
- dividing up the plasticised mass into individual strands,
- pressing the individual strands into a cooling liquid,
- cutting up the individual strands in the cooling liquid to form granules,
- transporting the dispersion of granules and cooling liquid through a first conduit to a separating apparatus, in particular a sieve tube,
- increasing the granule content of the cooling liquid by separating off a part of the cooling liquid, and
- removing the cooling liquid from the granules in the drier, characterised in that
the dispersion of granules and cooling liquid which has been concentrated is transported to the drier in a conveyor conduit which is a multiple longer in relation to the length of the first conduit.

2. A process according to claim 1 characterised in that the nominal diameter of the conveyor conduit is less than that of the first conduit.

3. A process according to claim 1 or claim 2 characterised in that the cooling liquid which has been removed is recycled for re-use for cooling in the operations of pressing the individual strands into the cooling liquid and cutting them up.

4. A process according to one of claims 1 to 3 characterised in that. the part of the cooling liquid which is separated off is re-used for the cooling operation.

5. A process according to one of claims 1 to 4 characterised in that the dispersion is pumped before the operation of separating off a part of the cooling liquid.

6. A process according to one of claims 1 to 5 characterised in that the dispersion is pumped after the operation of separating off a part of the cooling liquid.

7. A process according to one of claims 1 to 6 characterised in that the dispersion is conditioned prior to transportation to the drier.

8. A process according to one of claims 1 to 7 characterised in that the dispersion is conditioned before passing into the drier.

9. A process according to one of claims 1 to 8 characterised in that the part of the cooling liquid which is separated off as a setting value is varied in dependence on the granule content of the dispersion as a regulating value.

10. A process according to one of claims 1 to 8 characterised in that the part of the cooling liquid which is separated off as a setting value is varied in dependence on the volume flow of the dispersion as a regulating value.

11. A process according to one of claims 1 to 8 characterised in that the part of the cooling liquid which is separated off as a setting value is varied in dependence on the pressure of the dispersion as a regulating value.

12. A process according to one of claims 1 to 11 characterised in that the transport distance for the dispersion between the location at which a part of the cooling liquid is separated off and the drier is longer at least by an order of magnitude than the transport distance for the dispersion between the location at which the individual strands are cut up and the location at which a part of the cooling liquid is separated off.

## Revendications

1. Procédé de fabrication de granules à base de matériaux polymères comportant les étapes suivantes :
- plastification du polymère
- répartition de la masse plastifiée en boudins individuels
- injection des boudins individuels dans un liquide de refroidissement
- découpage des boudins individuels en granules dans le liquide de refroidissement
- transport de la dispersion formée par les granules et le liquide de refroidissement à travers un premier conduit menant à un dispositif de séparation, en particulier un tube de tamisage
- augmentation de la teneur en granules du liquide de refroidissement par séparation d'une partie dudit liquide
- séparation du liquide de refroidissement des granules dans le séchoir,
caractérisé en ce que
la dispersion plus concentrée de granules et de liquide de refroidissement est acheminée jusqu'au séchoir dans un conduit de transport de longueur égale à plusieurs fois la longueur du premier conduit.

2. Procédé selon la revendication 1, caractérisé en ce que le diamètre nominal du conduit de transport est inférieur à celui du premier conduit.

3. Procédé selon la revendication 1 ou 2, caractérisé en ce que le liquide de refroidissement séparé est recyclé en vue d'être réutilisé à des fins de refroidissement lors des opérations d'injection et de découpage des boudins individuels.

4. Procédé selon l'une des revendications 1 à 3, caractérisé en ce que la partie séparée du liquide de refroidissement est de nouveau utilisée à des fins de refroidissement.

5. Procédé selon l'une des revendications 1 à 4, caractérisé en ce que la dispersion est pompée avant séparation d'une partie du liquide de refroidissement.

6. Procédé selon l'une des revendications 1 à 5, caractérisé en ce que la dispersion est pompée après séparation d'une partie du liquide de refroidissement.

7. Procédé selon l'une des revendications 1 à 6, caractérisé en ce que la dispersion est conditionnée avant son transport en direction du séchoir.

8. Procédé selon l'une des revendications 1 à 7, caractérisé en ce que la dispersion est conditionnée avant de pénétrer dans le séchoir.

9. Procédé selon l'une des revendications 1 à 8, caractérisé en ce que l'on fait varier la partie séparée du liquide de refroidissement, en tant que variable réglable, en fonction de la teneur en granules de la dispersion, en tant que variable commandée.

10. Procédé selon l'une des revendications 1 à 9, caractérisé en ce que l'on fait-varier la partie-séparée du liquide de refroidissement, en tant que variable réglable, en fonction du débit de la dispersion, en tant que variable commandée.

11. Procédé selon l'une des revendications 1 à 10, caractérisé en ce que l'on fait varier la partie séparée du liquide de refroidissement, en tant que variable réglable, en fonction de la pression de la dispersion, en tant que variable commandée.

12. Procédé selon l'une des revendications 1 à 11, caractérisé en ce que le trajet de transport de la dispersion entre le point où une partie du liquide de refroidissement est séparée et le séchoir est plus long d'au moins un ordre de grandeur que le trajet de la dispersion entre le point où les boudins individuels sont découpés et le point où une partie du liquide de refroidissement est séparée.
